# EUROPEAN PATENT APPLICATION

(11) **EP 1 514 895 A2**
(43) Date of publication of application: **16.03.2005**
(21) Application number: 04076705.5
(22) Date of filing: 10.06.2004
(51) Int. Cl.: C08J 9/00

(54) **Activated graphite-containing particulate, expandable polystyrene**

(30) Priority: 11.06.2003 NL 1023639
(71) Applicant: SYNBRA TECHNOLOGY B.V., 4871 NM Etten-Leur (NL)
(72) Inventor: Noordegraaf, Jan, 6602 ZX Wijchen (NL)
(74) Representative: Valkonet, Rutger

(57) **Abstract**

The present invention relates to a particulate, expandable polystyrene (EPS) which can be processed into a foam having a fine cell structure and a low density and which, in order to enhance the fire resistance thereof, contains a fire retardant. The present invention furthermore relates to a method for preparing particulate, expandable polystyrene (EPS) and to a special use of the particulate, expandable polystyrene (EPS) thus obtained.

## Description

Particulate, expandable polystyrene (EPS), method for preparing particulate, expandable polystyrene as well as a special use of polystyrene foam material.

The present invention relates to a particulate, expandable polystyrene (EPS) which can be processed into a foam having a fine cell structure and a low density and which, in order to improve the thermal insulation value thereof, contains a a thermal insulation value-increasing material. The present invention furthermore relates to a method for preparing particulate, expandable polystyrene (EPS) as well as to a polystyrene-based foam material.

US patent No. 6,444,714 relates to a process for preparing particulate, expandable polystyrene (EPS) wherein styrene is polymerised in an aqueous suspension in the presence of 5-50 wt. % of expandable graphite, forming styrene particles having an average particle size of 0.2-2.0 mm. Since the viscosity of the mixture is increased by the use of such a high percentage of graphite, the process will be carried out at high temperatures, in particular 130 °C, as a result of which it becomes increasingly difficult to retain the foaming agent pentane after said polymerisation.

German Gebrauchsmuster DE 296 16 363 U1 relates to a method for preparing a flexible polystyrene foam having a density from 5 to 20 g/l, in which 3-10 wt.% of carbon black or graphite is present.

European patent application No. 0 994 145 relates to a styrene polymer-based foam containing 5-50 wt.% of expandable hexagonal graphite. Such a foam material may be obtained by applying expandable graphite to the prefoamed particles of the styrene polymer, after which the particles are coated with graphite material. Although it is also possible to add expandable graphite material to unfoamed styrene polymer, more specific information with regard to such a method is not provided.

From US patent No. 6,414,041 there is known an expandable polystyrene (EPS) which comprises 0.1-25 wt.% of graphite particles having an average particle size of more than 50 µm. Such a polystyrene material is obtained by polymerization in an aqueous suspension in the presence of a foaming agent.

Such a particulate, expandable polystyrene (EPS) is known from European patent application No. 0 915 127, wherein the EPS particles, which contain 0.5-8 wt.% of graphite, are coated with 0.001-0.5 wt.% of a hydrophobic agent, in particular paraffin wax comprising 10-30 carbon atoms in the carbon chain is mentioned therein as a hydrophobic agent. Such particles furthermore contain an organic bromine compound having a bromine content of at least 70 wt.% as a flame retardant.

From European patent application No. 1 002 829 a particulate, expandable polystyrene (EPS) is known which contains 1-25 wt.% of solids being insoluble in water and C₄-C₁₀ hydrocarbon compounds, wherein the solid has an average particle size of > 50 µm or, when in needle form, a length of > 20 µm. The solids mentioned therein include: hydrophobic silicate, fibre glass, synthetic resin, metal pigment, hydrophobic metal oxide or graphite, wherein the expandable particles can be obtained by means of an extrusion process or a polymerisation process.

The starting material used for preparing expandable polystyrene (EPS) can be obtained not only by means of the extrusion process, as known from International application WO 00/43442, but also by means of suspension polymerisation. The EPS granulated material thus obtained is generally used as a starting material in the packaging industry and in the construction industry. The method for the further processing comprises a prefoaming treatment, in which an amount of steam is passed through a layer of EPS granules in an expansion vessel, causing the foaming agent present in the EPS granules, usually pentane, to evaporate, resulting in foaming of the granules. After a storage period of about 4-48 hours, also referred to as maturing, the thus prefoamed granules are charged to a mould, in which further expansion of the granules takes place under the influence of steam. The mould that is used for this purpose is provided with small openings, so that the foaming agent that is still present can escape during the expansion process whilst the granules fuse into the desired shape. In principle, there are no limitations as regards the dimensions of the product thus formed, and it is possible to form blocks for the construction industry as well as meat dishes or fish boxes.

In the production of EPS granules, a particle size having a so-called Gauss distribution is obtained, generally over a range from 0.3 to 2.5 mm. In practice it has become apparent that the fraction having a particle size < 0.3 mm is in fact unsuitable for normal packaging material, and that particles having a particle size < 0.6 mm are not suitable for construction purposes. Although it is possible to influence the particle size within certain ranges during the suspension polymerisation, there will in principle always be a number of residual fractions, viz. small particles having a particle size < 0.4 mm and large particles having a particle size > 2.4 mm. Since such residual fractions still contain valuable materials, the present Applicant has already developed a method for recycling said materials in an extruder. The starting material, viz. residual fraction having a small or a large particle size, is fed to the extruder, with all of the foaming agent exiting the starting material during the extrusion process, which foaming agent is discharged via a vent port mounted on the extruder and combusted in an integrated post-combustion process, during which process steam may be generated. The granulated material, from which the foaming agent has thus been removed, is carried out of the extruder via a heated extrusion head and chopped into small particles. A problem that occurs with such a recycling process is that the expandable polystyrene (EPS) frequently comprises fire retardants besides foaming agent, which fire retardants start to decompose at the temperatures that prevail in the extruder, separating halogen radicals, as a result of which the chain length of polystyrene is undesirably reduced. In addition, the formation of halogen gas may furthermore lead to corrosion of the extruder. Thus, the residual fractions are not recycled as 100% material.

One aspect of the present invention is to provide a particulate, expandable polystyrene exhibiting a strongly increased fire resistance as a result of the addition of a specific fire retardant.

Another aspect of the present invention is to provide a method for preparing a particulate, expandable polystyrene (EPS), wherein the obtained EPS can be used in sandwich panels, which sandwich panels not only exhibit a high degree of fire resistance, but also a lambda value that is desirable for insulation purposes.

Another aspect of the present invention is to provide a method for preparing a particulate, expandable polystyrene (EPS), wherein EPS granules suitable for use in a fire-resistant construction can be formed in a simple manner.

Yet another aspect of the present invention is to provide a method for preparing a particulate, expandable polystyrene (EPS), wherein high percentages of fire retardant can be incorporated in the EPS without high temperatures and loss of foaming agent occurring.

The invention as referred to in the introduction is characterized in that graphite is present in the polystyrene particles as a fire retardant in an amount of 40-80 wt.%, based on the amount of styrene polymer.

The use of graphite in such an amount makes it possible to achieve one or more of the above aspects of the present invention.

In order to achieve an optimum degree of fire resistance, the amount of graphite as a fire retardant is preferably 50-70 wt.%, based on the amount of styrene polymer, with expandable graphite being especially preferred.

The present invention furthermore relates to a method for preparing particulate, expandable polystyrene (EPS), wherein styrene polymer is fed to an extruder and mixed with at least one foaming agent and graphite in an amount of 40-80 wt.%, preferably 50-70 wt.%, and extruded, wherein the material is cooled and further reduced to particles.

In a special embodiment, styrene polymer may furthermore be processed in an extruder together with graphite in an amount of 40-80 wt.%, preferably 50-70 wt.%, based on the amount of styrene polymer, after which the intermediate material thus obtained is subjected to an impregnation treatment with foaming agent so as to obtain a base material, which base material is cooled and further processed into particles. Thus a concentrate is prepared first, which concentrate is subsequently gassed in an autoclave. The high temperatures that are known in the prior art are avoided when using such a special embodiment of the present invention, so that the foaming agent can be retained.

The present invention further relates to a polystyrene foam material based on the particulate, expandable polystyrene as discussed above, wherein the polystyrene foam material is preferably incorporated in sandwich panels, with the foam material being present between the two plates of which the sandwich panel is composed.

The present invention will now be explained by means of a number of examples and comparative examples, in which connection it should be noted that the present invention is by no means limited to such special examples.

In a test arrangement consisting of a furnace in which a sandwich panel is disposed, an EPS plate having a thickness of 10 cm was placed between the steel plates of the sandwich panel in all the examples. The cold side of the plate was provided with thermocouples. Using a burner, the hot side of the sandwich panel was subjected to a temperature profile such that a value of 1000 °C was reached after 60 minutes. The requirement that is made of a fire-resistant panel is that the average value of the thermocouples must not exceed a value of 140 °C and that a single thermocouple must not exceed a value of 180 °C. This requirement with regard to the fire resistance test is shown in the last column of the table. Another important requirement is that the sandwich panel must retain its structural integrity during the test period of at least 60 minutes.

### Comparative Example 1.

In Comparative Example 1, an amount of expandable graphite of 10% was incorporated in the EPS foam, which foam was incorporated in a sandwich panel as described above. After the fire resistance test, the particulate EPS appeared to have completely disappeared, wherein the panel did not stand the fire resistance test at 140 °C.

### Comparative Example 2.

The same operations as described in Comparative Example 1 were carried out, except that 0.8% of hexabromine cyclododecane (HBCD) and 0.3% of dicumyl peroxide were added. The results are comparable to those of Comparative Example 1, with this difference that the sandwich panel stood the B2-(fire resistance) test.

### Comparative Example 3.

The same operations as described in Comparative Example 1 were carried out, except that the amount of expandable graphite was 20%. Upon examination of the fire resistance it became apparent that the sandwich panel did not stand the B2-test.

### Comparative Example 4.

The same operations as described in Comparative Example 1 were carried out, except that an amount of expandable graphite of 30% was used. Although the lambda value of such a sandwich panel is 0.02900 W/mK, the sandwich panel did not stand the B2-test.

### Comparative Example 5.

The same operations as described in Comparative Example 1 were carried out, except that the amount of expandable graphite was increased to 40%. In spite of a good lambda value of 0.02900 W/mK, the fire resistance of the sandwich panel was insufficient. It may be mentioned in this connection that the average temperature of 140 °C on the cold side was exceeded well within the hour.

### Example 1.

Styrene polymer particles were processed in an extruder, after which the granulated material thus obtained was transferred to a pilot plant, where it was heated to a temperature of 90 °C. Pentane was impregnated under a pressure of 6.5 bar for a period of 2 hours to obtain pentane-containing EPS granules comprising 50% expandable graphite. After foaming, a foam having a density of 40 kg/m³ was obtained. The sandwich panel that was subsequently formed stood the fire resistance test, which implied that an average temperature of 140 °C was not exceeded within one hour. In addition to that, the lambda value was furthermore advantageously reduced to a value of 0.02850 W/mk.

### Example 2.

The same operations as described in Example 1 were carried out, except that the amount of expandable graphite was increased to 60%. The lambda value was measured at 0.02800 W/mK, and the sandwich panel thus obtained successfully stood the B2-test as well as the fire resistance test in an environment 140 °C, which implied that an average temperature of 140 °C was not exceeded within one hour.

### Example 3.

The same operations as described in Example 2 were carried out, except that graphite from a different supplier was used. The lambda value was measured at 0.02800 W/mK, and the sandwich panel thus obtained successfully stood the B2-test as well as the fire resistance test in an environment 140 °C.

### Example 4.

The same operations as described in Example 1 were carried out, except that an amount of expandable graphite of 70% was used. The obtained results were approximately the same as the results obtained with an amount of expandable graphite of 60%, see Example 3.

### Example 5.

The same operations as described in Example 1 were carried out, in which connection it may furthermore be noted that particulate, expandable polystyrene was prepared by means of an extrusion process, after which pentane was added as a foaming agent via the suspension route, viz. pentane was added under pressure to the liquid flow in the extruder. After foaming, a foam having a density of 40 kg/m³ was obtained from the pentane-containing EPS granules thus obtained. Although a slightly higher lambda value was measured, the sandwich panel thus obtained stood the B2-test as well as the fire resistance test in an environment 140 °C.

### Example 6.

The same operations as described in Example 5 were carried out, except that 0.8% of HBCD and 0.3% of dicumyl peroxide were present in the expandable polystyrene (EPS). The foam material thus obtained stood both the B2-test and the fire resistance test in an environment 140 °C.

### Example 7.

The same operations as described in Example 1 were carried out, in which connection it may furthermore be noted that the preparation of the particulate, expandable polystyrene took place in an extruder by means of an extrusion process with a foaming agent, in particular pentane, being added.

| Example, No. | wt.% HBCD | wt.% Dicumyl peroxide | wt.% added | Type of addition | Lambda value W/mK, 20 g/l | B2-test | Fire resist. test at T=140°C |
|---|---|---|---|---|---|---|---|
| Comparative Example 1 | | | 10 | Exp. gr.¹⁾ | | no | |
| Comparative Example 2 | 0.8 | 0.3 | 10 | Exp. gr.¹⁾ | | yes | no |
| Comparative Example 3 | | | 20 | Exp. gr.¹⁾ | 0.03000 | no | |
| Comparative Example 4 | | | 30 | Exp. gr.¹⁾ | 0.02900 | no | |
| Comparative Example 5 | | | 40 | Exp. gr.¹⁾ | 0.02900 | yes | no |
| Example 1 | | | 50 | Exp. gr.¹⁾ | 0.02850 | yes | yes |
| Example 2 | | | 60 | Exp. gr.¹⁾ | 0.02800 | yes | yes |
| Example 3 | | | 60 | Exp. gr.²⁾ | 0.02800 | yes | yes |
| Example 4 | | | 70 | Exp. gr.¹⁾ | 0.02850 | yes | yes |
| Example 5 | | | 50 | Exp. gr.¹⁾ | 0.0320 | yes | yes |
| Example 6 | 0.8 | 0.3 | 50 | Exp. gr.¹⁾ | 0.0320 | yes | yes |
| Example 7 | | | 50 | Exp. gr.¹⁾ | 0.0320 | yes | yes |

| | | | | | | | |
|---|---|---|---|---|---|---|---|
| ¹⁾ Exp. gr. = Expandable graphite type ES200 A5, marketed by Graphit Kropmuhl AG. | | | | | | | |
| ²⁾ Exp. gr. = Expandable graphite type 2151, marketed by Bramwell Graphite Ltd. | | | | | | | |

## Claims

1. A particulate, expandable polystyrene (EPS) which can be processed into a foam having a fine cell structure and a low density and which, in order to enhance the fire resistance thereof, contains a fire retardant, **characterized in that** graphite is present in the polystyrene particles as a fire retardant in an amount of 40-80 wt.%, based on the amount of styrene polymer.

2. A particulate, expandable polystyrene (EPS) according to claim 1, **characterized in that** the amount of graphite as a fire retardant is 50-70 wt.%, based on the amount of styrene polymer.

3. A particulate, expandable polystyrene (EPS) according to any one or more of the claims, **characterized in that** said graphite is expandable graphite.

4. A method for preparing particulate, expandable polystyrene (EPS) according to any one or more of the preceding claims, **characterized in that** styrene polymer is fed to an extruder and mixed with at least one foaming agent and graphite in an amount of 40-80 wt.% and extruded, the material being cooled and further reduced to particles.

5. A method for preparing particulate, expandable polystyrene (EPS) according to any one or more of the preceding claims 1-3, **characterized in that** styrene polymer is processed in an extruder together with graphite in an amount of 40-80 wt.%, based on the amount of styrene polymer, after which the intermediate material thus obtained is subjected to an impregnation treatment with foaming agent so as to obtain a base material, which base material is cooled and further processed into particles.

6. A method according to any one or more of the claims 4-5, **characterized in that** graphite is used in an amount of 50-70 wt.%.

7. A method according to any one or more of the claims 4-6, **characterized in that** said graphite is expandable graphite.

8. A polystyrene foam material on basis of particulate, expandable polystyrene according to claims 1-3.

9. A polystyrene foam material according to claim 8, **characterized in that** the polystyrene foam is present between the plates of a sandwich panel composed of plates.
